# EUROPÄISCHE PATENTSCHRIFT

(11) **EP 2 897 770 B1**
(45) Veröffentlichungstag und Bekanntmachung des Hinweises auf die Patenterteilung: **19.09.2018**
(21) Anmeldenummer: 14796491.0
(22) Anmeldetag: 10.11.2014
(51) Int. Cl.: B25J 15/00, B25J 15/02

(54) **ZWILLINGSGREIFER**
TWIN GRIPPER
PRÉHENSEUR DOUBLE

(30) Priorität: 14.11.2013 DE 102013112572
(43) Veröffentlichungstag der Anmeldung: 29.07.2015
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2014/074184
(87) Internationale Veröffentlichungsnummer: WO 2015/071222

(56) Entgegenhaltungen:
- DD-A1- 273 597
- JP-A- 2011 212 813

## Beschreibung

Die Erfindung betrifft einen Zwillingsgreifer.

Moderne Rohrschneidemaschinen sind als Sägebearbeitungszentren ausgebildet, in denen Rohre abgelängt und die Rohrenden in weiteren Arbeitsschritten einer zusätzlichen Bearbeitung unterworfen werden. Zum Transport der abgelängten Rohrabschnitte von einer Bearbeitungsstation zur nächsten sind Greifer vorgesehen, die beispielsweise den in der Sägestation abgelängten Rohrabschnitt greifen und einer Anfasvorrichtung zuführen. Der Rohrabschnitt wird in der Anfasvorrichtung eingespannt, angefast, und nachdem der Anfasvorgang beendet ist, wird der dann angefaste Rohrabschnitt mit einem weiteren Greifer einer nächsten Bearbeitungsstation, beispielsweise einer Längenmessung zugeführt, in der eine Kontrolle der Länge des Rohrabschnittes vorgenommen wird, damit dieser geprüft zur Verfügung gestellt werden kann.

Zur Erhöhung der Stückzahl der pro Zeiteinheit abgelängten, bearbeiteten und geprüften Rohrabschnitte wird in zunehmendem Maße eine Zwillingsbearbeitung vorgenommen, d. h. es werden gleichzeitig von zwei Langprofilen zwei Rohrabschnitte abgelängt. Diese müssen dann mit einem Zwillingsgreifer gleichzeitig gegriffen und Im weiteren Verlauf der Bearbeitung paarweise zur jeweils nächsten Bearbeitungsstation transportiert werden.

Problematisch beim gleichzeitigen Greifen zweier Rohrabschnitte ist die Tatsache, dass die Rohrabschnitte nicht exakt im Durchmesser gleich sind, sondern geringfügige Abweichungen voneinander aufweisen können, während grundsätzlich das Einspannen zweier Rohrabschnitte zwischen jeweils zwei Backen überbestimmt ist, so dass einer der beiden Rohrabschnitte in der Regel nicht fest eingespannt und gegriffen wird.

Aus der DE 20 2009 010 757 U1 ist ein Schienengreifer zur Handhabung von Schienen als Hebelast offenbart Dabei sind zwei Greifelemente vorgesehen, mit jeweils zwei Greifbacken, wobei sich Greifbacken der verschiedenen Greifelemente kreuzen und somit jede der beiden Greifbacken beiden anzuhebenden Schienen zugeordnet wird.

Aus der DE 10 2010 021 422 A1 ist eine Greifvorrichtung beschrieben, wobei die einzelnen Greifvorrichtungen mit zwei oder mehr Greifelementen ausgestattet sein können und alle Greifelemente einer Greifvorrichtung zueinander synchron zeitlich verfahren werden.

In der DD 2 73 597 A1 ist ein Zwillingsgreifer gemäß dem Oberbegriff des Anspruchs 1 zum reihenweisen Stecken von Stecklingen quer zur Bewegungsrichtung offenbart. Nachteiligerweise ist dieser für eine hochpräzise Anwendung im Maschinenbau nicht geeignet.

Aufgabe der vorliegenden Erfindung ist es daher, einen Zwillingsgreifer zur Verfügung zu stellen, der das gleichzeitige feste Greifen zweier Rundprofilabschnitte ermöglicht.

Die Aufgabe wird durch einen eingangs genannten Zwillingsgreifer mit den Merkmalen des Anspruchs 1 erfüllt.

Der erfindungsgemäße Zwillingsgreifer zum gleichzeitigen Greifen zweier Rundprofilabschnitte umfasst eine erste Aufnahme mit einer ersten Auflage und einer weiteren ersten Auflage und eine zweite Aufnahme mit einer zweiten Auflage und einer weiteren zweiten Auflage.

Erfindungsgemäß sind die erste und zweite Auflage positionsfest miteinander verbunden, wobei positionsfest meint, dass auch während des Greifvorganges und auch unter Ausübung von Kraft auf die beiden Rundprofilabschnitte die erste und zweite Auflage ihre Position relativ zueinander nicht verändern. Die erste und zweite weitere Auflage sind hingegen federelastisch miteinander verbunden, so dass die grundsätzliche Überbestimmtheit beim Greifen von zwei Rundprofilabschnitten durch vier Auflagen aufgehoben wird, indem eine der vier Auflagen, nämlich hier die zweite weitere Auflage federelastisch gegenüber der ersten weiteren Auflage angeordnet ist.

Die beiden Auflagen sind zum Greifen der beiden Rundprofilabschnitte gegen die beiden weiteren Auflagen während des Betriebs in einer Verfahrrichtung hin und her verfahrbar.

Vorzugsweise ist die zweite weitere Auflage federelastisch in Verfahrrichtung beweglich, so dass während des Greifens ein federelastisches Nachgeben der zweiten weiteren Auflage, vorzugsweise exakt in Verfahrrichtung, erfolgt und damit eine Verschiebung der zweiten weiteren Auflage senkrecht zur Verfahrrichtung ausgeschlossen wird und aufgrund der vorzugsweise im Querschnitt prismatischen Ausformung der vier Auflagen beim Greifvorgang jeder der beiden Rundprofilabschnitte an jeweils vier Kontaktlinien in jeder der beiden Aufnahmen drehfest aufliegt.

Da moderne Rohrschneidemaschinen und deren Bauteile hochpräzise arbeiten müssen, werden hohe Päzisionsanforderungen auch an den federelastischen Zwillingsgreifer gestellt. Der Federmechanismus wird daher erfindungsgemäß dadurch ausgebildet, dass in einem Metallblock, vorzugsweise zwischen den beiden die weiteren Auflagen aufweisenden Backenabschnitten ein Spalt ausgeformt wird, beispielsweise mittels Drahterodierverfahren, der an einer Seite offen ist und an einer anderen Seite durch den Federabschnitt begrenzt ist. Der schmale, vorzugsweise aus Metall bestehende kreissegmentförmige Federabschnitt formt die eigentliche Feder zwischen den beiden Backenabschnitten aus.

Günstigerweise weist der Spalt über den größten Bereich seiner Ausdehnung eine konstante Spaltbreite auf. Dadurch ist der Spalt im Drahterodierverfahren einfach herstellbar.

Damit zwei im Durchmesser unterschiedlich große Rundprofilabschnitte vom Zwillingsgreifer gleichzeitig fest gegriffen werden können, ist ein Abstand der zweiten Auflagen voneinander im nicht gespannten Zustand etwas größer als ein Abstand der ersten Auflagen voneinander, so dass, auch wenn ein etwas dünneres Rohr von einer weiteren Aufnahme gegriffen wird, dieses dennoch fest eingespannt werden kann. Vorzugsweise erfolgt die federelastische Bewegung der zweiten weiteren Auflage parallel zur Verfahrrichtung.

In einer besonders bevorzugten Ausführungsform der Erfindung weist der Zwillingsgreifer einen Greifarm auf, an dessen einem Ende ein Greifkopf mit einem Zentrischspanner und zwei in dem Zentrischspanner gegeneinander symmetrisch verfahrbaren Backen mit den beiden Aufnahmen angeordnet ist. Günstigerweise umfasst der Greifkopf die zwei gegeneinander in Verfahrrichtung verfahrbaren Backen, und die erste Backe weist die beiden Auflagen und die zweite Backe die beiden weiteren Auflagen auf. Die Bewegung der beiden Backen ist elektronisch oder pneumatisch gesteuert.

Vorzugsweise ist die Ausdehnung der Auflagen in Längsrichtung vom Zwillingsgreifertyp abhängig und variabel ausgestaltet, aber die Ausdehnung des Federabschnitts in Längsrichtung ist unabhängig von der Ausdehnung der Auflagen gleich ausgebildet, so dass unabhängig vom Zwillingsgreifertyp die Federkonstante im Wesentlichen gleich bleibt.

Die Erfindung wird anhand von vier Ausführungsbeispielen in zwölf Figuren beschrieben. Dabei zeigen:
Fig. 1 seitliche Ansicht einer ersten Ausführungsform eines erfindungsgemäßen Zwillingsgreifers,
Fig. 2 Draufsicht des Zwillingsgreifers in Fig. 1,
Fig. 3 erste perspektivische Ansicht des Zwillingsgreifers in Fig. 1,
Fig. 4 zweite perspektivische Ansicht des Zwillingsgreifers in Fig. 1,
Fig. 5 eine zweite Ausführungsform des erfindungsgemäßen Zwillingsgreifers mit schmaleren Aufnahmen gegenüber der ersten Ausführungsform,
Fig. 6 eine zweite perspektivische Ansicht des Zwillingsgreifers in Fig. 5,
Fig. 7 eine seitliche Ansicht einer dritten Ausführungsform des erfindungsgemäßen Zwillingsgreifers,
Fig. 8 eine Draufsicht der dritten Ausführungsform des erfindungsgemäßen Zwillingsgreifers in Fig. 7,
Fig. 9 eine erste perspektivische Ansicht des Zwillingsgreifers in Fig. 7,
Fig. 10 eine zweite perspektivische Ansicht des Zwillingsgreifers in Fig. 7,
Fig. 11 eine erste perspektivische Ansicht einer vierten Ausführungsform eines erfindungsgemäßen Zwillingsgreifers mit gegenüber der dritten Ausführungsform kürzeren Aufnahmen,
Fig. 12 eine zweite perspektivische Ansicht des Zwillingsgreifers in Fig. 11.

Der Zwillingsgreifer 1 eignet sich zum gleichzeitigen Greifen zweier Rundprofile oder Rundprofilabschnitte, wobei unter Rundprofilen im Wesentlichen entlang ihrer Längsrichtung im äußeren Querschnitt kreisförmige Voll- oder Hohlprofile verstanden werden. Die Rundprofile können metallische Anteile aufweisen oder vollständig aus Metall ausgebildet sein.

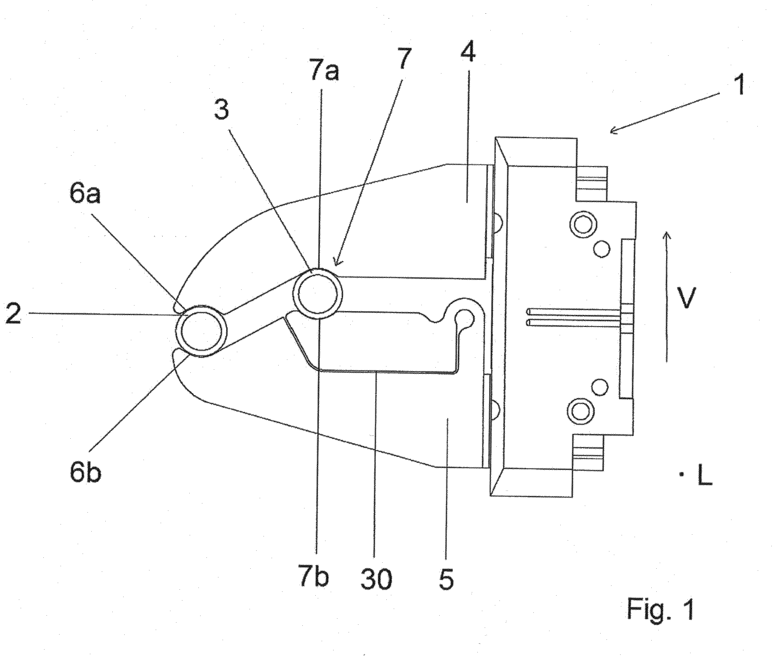

Der in Fig. 1 dargestellte Teil des Zwillingsgreifers 1 ist ohne einen von einem Zwillingsgreiferkopf abgehenden gelenkigen Zwillingsgreiferarm abgebildet. Der Zwillingsgreiferarm bewegt den in Fig. 1 dargestellten Zwillingsgreiferkopf in die Aufnahmepositionen zum gleichzeitigen Greifen zweier Rohrabschnitte 2, 3 und überführt den Zwillingsgreiferkopf in eine Abgabeposition zum Abgeben der beiden Rohrabschnitte 2, 3. Der erfindungsgemäße Zwillingsgreifer 1 findet beispielsweise in Rohrschneidemaschinen Anwendung, um die beiden Rohrabschnitte 2, 3 von einer Bearbeitungsstation zur nächsten zu bringen.

Nachdem gleichzeitig von zwei nebeneinander, vorzugsweise parallel angeordneten Rohren die zwei Rohrabschnitte 2, 3 in einer Sägestation eingespannt und abgelängt wurden, werden die Rohrabschnitte 2, 3 mit Hilfe des erfindungsgemäßen Zwillingsgreifers 1 gleichzeitig gegriffen, in der Sägestation gelöst und einer weiteren Bearbeitungsstation, beispielsweise einer Anfaseinrichtung zugeführt und dort eingespannt und vom Zwillingsgreifer 1 losgelassen. Nachdem die beiden Rohrabschnitte 2, 3 angefast sind, können sie durch einen weiteren Zwillingsgreifer 1 wiederum gegriffen, von der Anfaseinrichtung losgelassen und einer Längenkontrolle zugeführt werden, in der die beiden angefasten Rohrabschnitte 2, 3 in ihrer Länge abschließend kontrolliert werden.

Der erfindungsgemäße Zwillingsgreifer 1 eignet sich zum gleichzeitigen sicheren Greifen der beiden Rohrabschnitte 2, 3. Der Zwillingsgreifer 1 weist eine Backe 4 und eine weitere Backe 5 auf. An der einen Backe 4, die in Fig. 1 oben eingezeichnet ist, sind eine erste Auflage 6a und eine zweite Auflage 7a angeordnet, die weitere Backe 5 weist eine erste weitere Auflage 6b und eine zweite weitere Auflage 7b auf. Die beiden ersten Auflagen 6a, 6b bilden eine erste Aufnahme 6 für den ersten Rohrabschnitt 2 und die beiden zweiten Auflagen 7a, 7b bilden eine zweite Aufnahme 7 für den zweiten Rohrabschnitt 3 aus.

Die erste und zweite Auflage 6a, 7a sind während des Betriebs und auch während des Greifvorganges ständig relativ positionsfest zueinander angeordnet. Die erste und zweite Auflage 6a, 7a sind in ein einstückiges Bauteil, vorzugsweise in ein Metallbauteil eingeformt.

Die erste weitere Auflage 6b und die zweite weitere Auflage 7b sind hingegen während des Spannvorganges nicht ständig exakt positionsfest zueinander angeordnet, sondern die zweite weitere Auflage 7b bewegt sich während des Greifvorganges in der Regel relativ zu der ersten weiteren Auflage 6b. Die zweite weitere Auflage 7b ist im Greifzustand federelastisch gegen die erste weitere Auflage 6b gespannt. Durch die federelastische Anordnung einer der vier Auflagen 6a, 6b, 7a, 7b wird es ermöglicht, dass beide Rohrabschnitte 2, 3 gleichzeitig fest und mit annähernd gleicher Kraft vom Zwillingsgreifer 1 gegriffen werden.

Die Backe 4 und die weitere Backe 5 sind gegeneinander in Verfahrrichtung V verfahrbar. Die Verfahrrichtung V ist in Fig. 1 senkrecht zu einer Längsrichtung L angeordnet. Die Längsrichtung L verläuft parallel zur Rohrabschnittlängsrichtung. Die Längsrichtung L ist in Fig. 1 senkrecht zur Zeichenebene, die Verfahrrichtung V in vertikaler Richtung in der Zeichenebene angeordnet.

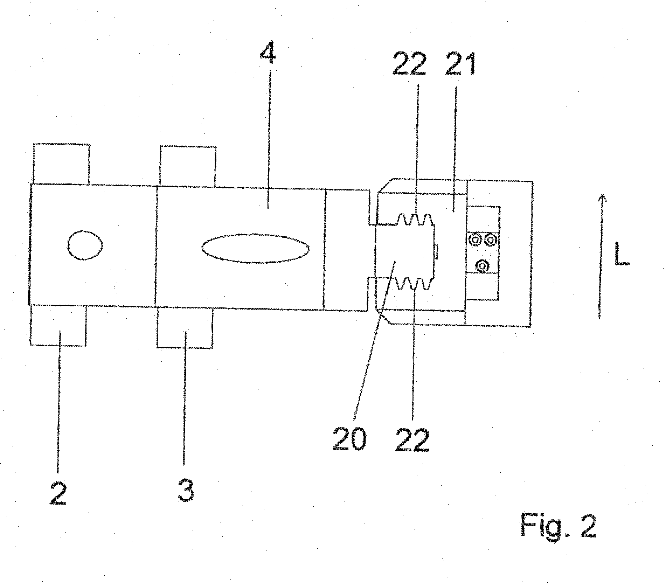

Fig. 2 zeigt den Zwillingsgreifer 1 in Fig. 1 in einer Draufsicht. Die eine Backe 4 ist mittels eines Zapfens 20 in einer Führung 21 eines Zentrischspanners geführt. Der Zapfen 20 weist an seinen in Längsrichtung L äußeren Seiten ein im Querschnitt gezacktes Profil 22 auf, das die Führungsfläche des Zapfens 20 in der Führung 21 vergrößert und so eine verbesserte Führungsstabilität gewährleistet. In Fig. 2 sind die beiden gleichzeitig eingespannten Rohrabschnitte 2, 3 zu erkennen. Der Zentrischspanner mit der Führung 21, dem Zapfen 20 und dem gezackten Profil 22 ist im Stand der Technik bekannt. Die beiden Backen 4, 5 sind auf den Zapfen 20 mittels Schrauben festschraubbar.

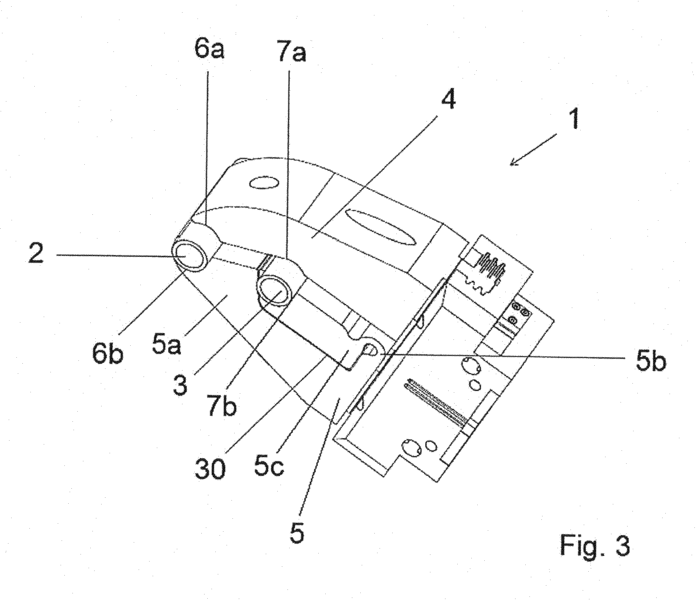

Fig. 3 zeigt den Zwillingsgreifer 1 der Fig. 1 in einer ersten perspektivischen Ansicht. Die beiden Rohrabschnitte 2, 3 sind gleichzeitig mit annähernd gleicher Kraft fest gegriffen. Die weitere Backe 5 ist auch aus einem einstückigen Bauteil, vorzugsweise einem einstückigen Metallbauteil geformt. Die weitere Backe 5 weist einen ersten Backenabschnitt 5a auf, der die erste weitere Auflage 6b umfasst. Der erste Backenabschnitt 5a ist über einen Federabschnitt 5b, der halbkreisförmig ausgebildet ist, mit einem zweiten Backenabschnitt 5c verbunden, der die zweite weitere Auflage 7b umfasst. Der erste Backenabschnitt 5a und der zweite Backenabschnitt 5c sind vollständig durch einen schmalen Spalt 30 voneinander getrennt und nur über den schmalen Federabschnitt 5b federelastisch miteinander verbunden. Die weitere Backe 5 kann beispielsweise durch ein Drahterodierverfahren einstückig aus dem Metallblock hergestellt werden.

Durch die Fertigung unterschiedlicher Zwillingsgreifer 1 mit verschiedenen Dicken des ringsegmentförmigen, schmalen Federabschnittes 5b kann die Federkraft verändert werden. Je dünner der Federabschnitt 5b, desto geringer die Federkraft und umgekehrt

Die beiden ersten Auflagen 6a, 6b und die beiden zweiten Auflagen 7a, 7b sind in Verfahrrichtung V direkt übereinander angeordnet. Während des Greifvorganges wird eine Kraft auf die zweite weitere Auflage 7b ausgeübt, und der zweite Backenabschnitt 5c wird federelastisch in den Spalt 30 hinein in Richtung des ersten Backenabschnitts 5a gedrückt. Die Bewegung des zweiten Backenabschnitts 5c erfolgt dabei zumindest während des Beginns des Einspannvorganges exakt in Verfahrrichtung V, so dass sowohl der erste Rohrabschnitt 2 als auch der zweite Rohrabschnitt 3 fest eingespannt bzw. gegriffen werden. Die vier Auflagen 6a, 6b, 7a, 7b sind im Querschnitt senkrecht zur Längsrichtung L prismatisch ausgebildet, so dass ein in der Aufnahme 6, 7 liegender Rohrabschnitt 2, 3 zwei parallele Kontaktlinien mit jeder der Auflagen ausbildet.

Üblicherweise können die Durchmesser von abgelängten Rohrabschnitten 2, 3 um 0,2 mm schwanken. Der Zwillingsgreifer 1 ist so ausgelegt, dass er Durchmesserschwankungen zwischen den Rohrabschnitten von ca. 0,5 mm ausgleichen kann. Eine Vertikalbewegung der zweiten weiteren Auflage 7b senkrecht zur Längsrichtung L und senkrecht zur Verfahrrichtung V beträgt in der in den Fign. 1 und 3 dargestellten Ausführungsform lediglich 0,005 mm.

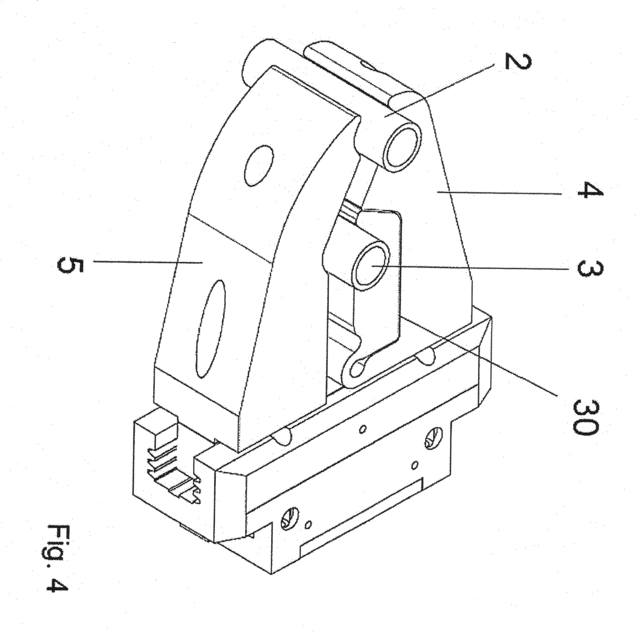

Fig. 4 zeigt den Zwillingsgreifer 1 in einer zweiten perspektivischen Ansicht von unten auf die weitere Backe 5.

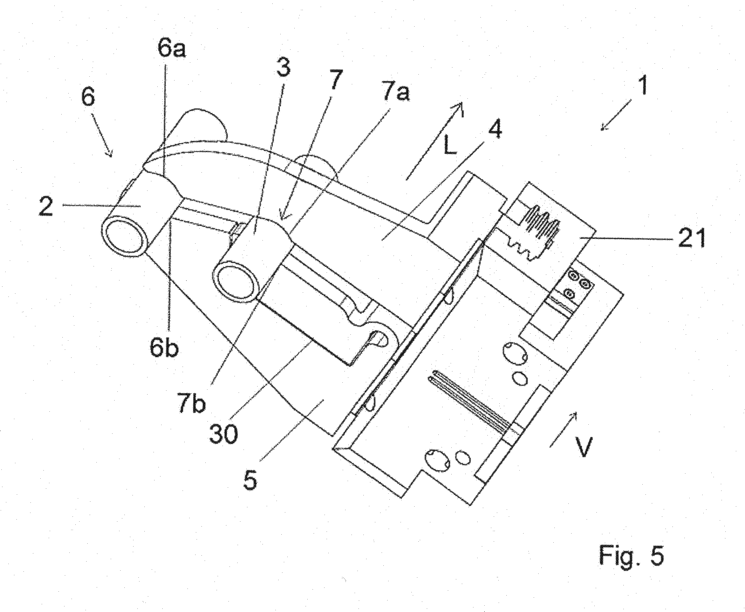

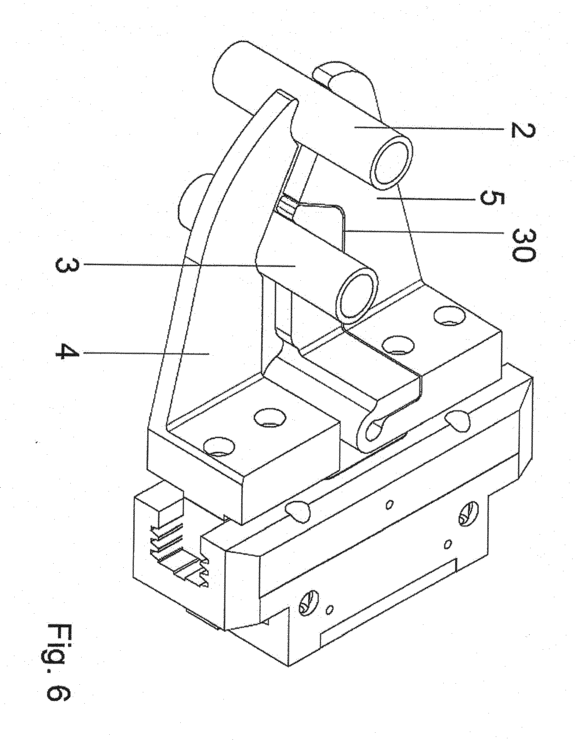

Fign. 5 und 6 zeigen einen ähnlichen Zwillingsgreifer 1 wie den in den Fign. 1 bis 4 dargestellten Zwillingsgreifer 1, wobei die vier Auflagen 6a, 6b, 7a, 7b in Längsrichtung L deutlich kürzer ausgebildet sind. Der Verfahrmechanismus der beiden Backen 4, 5 in der Führung 21 ist jedoch identisch, und insbesondere weisen die beiden Backen 4, 5 im Bereich benachbart zu der Führung 21 in Längsrichtung L eine identische Ausdehnung wie in den Fign. 1 bis 4 auf. Lediglich die Bereiche der beiden Backen 4, 5, in denen sich die beiden Aufnahmen 6, 7 befinden, sind in Längsrichtung L deutlich kürzer ausgebildet als in der ersten Ausführungsform. Wie die Fign. 5 und 6 auch zeigen, sind der Federabschnitt 5b der ersten Ausführungsform und der der zweiten Ausführungsform gleich lang. Dabei ist die Federkonstante der ersten Ausführungsform und der zweiten Ausführungsform ebenfalls zumindest im Wesentlichen identisch. Der Zwillingsgreifer 1 der zweiten Ausführungsform eignet sich natürlich insbesondere zum Greifen kürzerer abgelängter Rohrabschnitte 2, 3. Fig. 6 zeigt auch die Befestigung der beiden Backen 4, 5 auf den Zapfen 20 des bekannten Zentrischspanners mittels vier Schrauben.

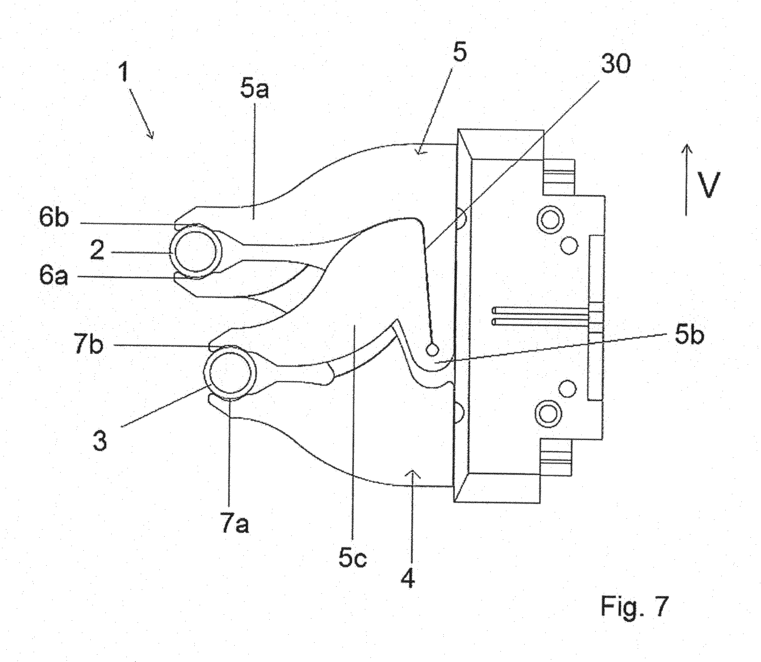

Fig. 7 zeigt eine dritte Ausführungsform eines erfindungsgemäßen Zwillingsgreifers 1. Während in den ersten beiden Ausführungsformen die beiden Rohrabschnitte 2, 3 im Wesentlichen senkrecht zur Verfahrrichtung V nebeneinander angeordnet sind, sind die beiden Rohrabschnitte 2, 3 der dritten Ausführungsform im Wesentlichen parallel zur Verfahrrichtung V nebeneinander angeordnet.

In Fig. 7 bezeichnen gleiche Bezugszeichen die gleichen Bauteile wie in den ersten beiden Ausführungsformen. Die beiden weiteren Auflagen 6b, 7b sind federelastisch miteinander verbunden. Auch hier sind die beiden weiteren Auflagen 6b, 7b aus einem Metallbauteil durch Drahterodierverfahren einstückig heraus gebildet.

Der zwischen dem ersten Backenabschnitt 5a und dem zweiten Backenabschnitt 5c ausgebildete Spalt 30 verläuft hier im Gegensatz zur ersten und zweiten Ausführungsform im Wesentlichen parallel zur Verfahrrichtung V, während er in der ersten und zweiten Ausführungsform im Wesentlichen senkrecht zur Verfahrrichtung V ausgebildet ist. Der Federabschnitt 5b ist ebenfall im Querschnitt senkrecht zur Längsrichtung L über seine gesamte Längsausdehnung halbkreissegmentförmig ausgebildet.

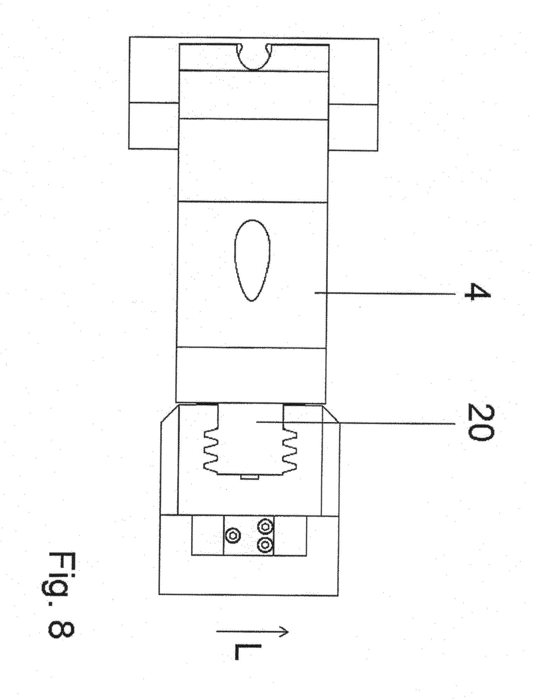

Fig. 8 zeigt die Führung 21 der beiden Backen 4, 5 in Fig. 7, die baugleich zur Führung 21 der Zwillingsgreifer 1 der ersten und zweiten Ausführungsform ausgebildet ist.

Die erste Auflage 6a der dritten Ausführungsform in Fig. 7 ist an einem Arm 70 angeordnet, der durch eine Öffnung 71 in dem zweiten Backenabschnitt 5c hindurchgeführt ist.

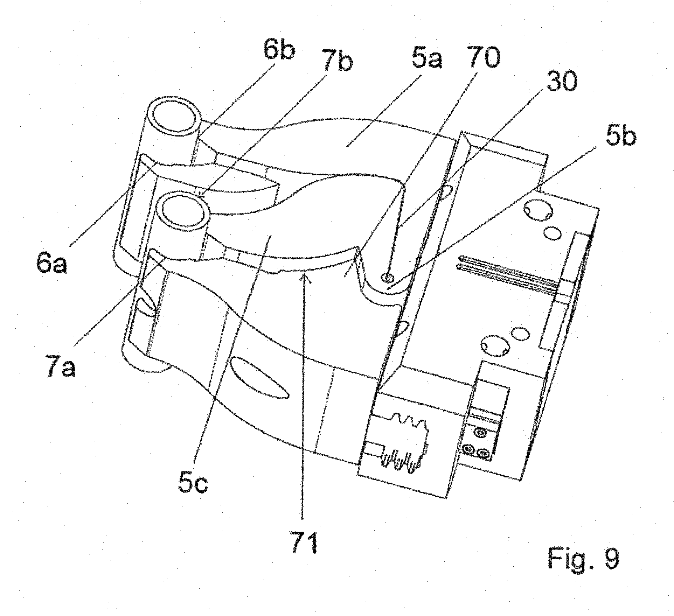

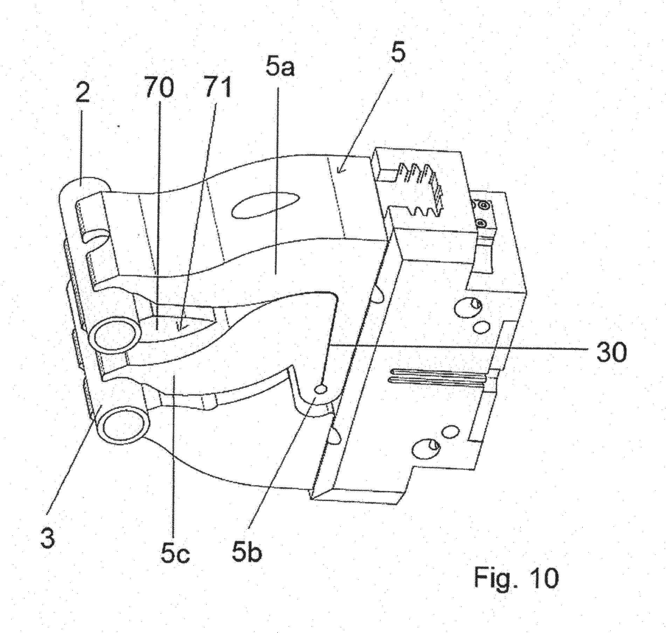

Die Fign. 9 und 10 zeigen die Anordnung etwas deutlicher. Die erste Auflage 6a und die zweite Auflage 7a sind auch unter Belastung positionsfest über den Arm 70 miteinander verbunden, der durch die Öffnung 71 hindurchgeführt ist.

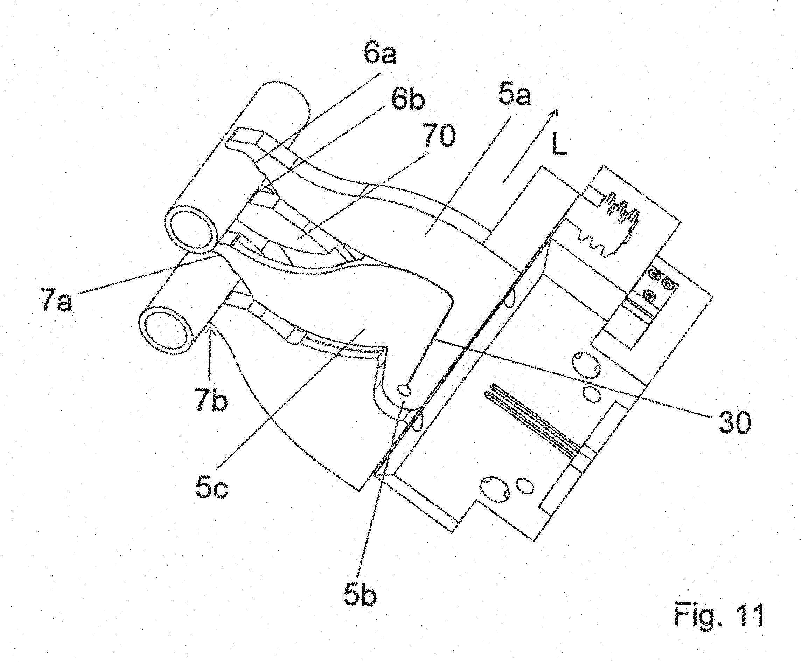

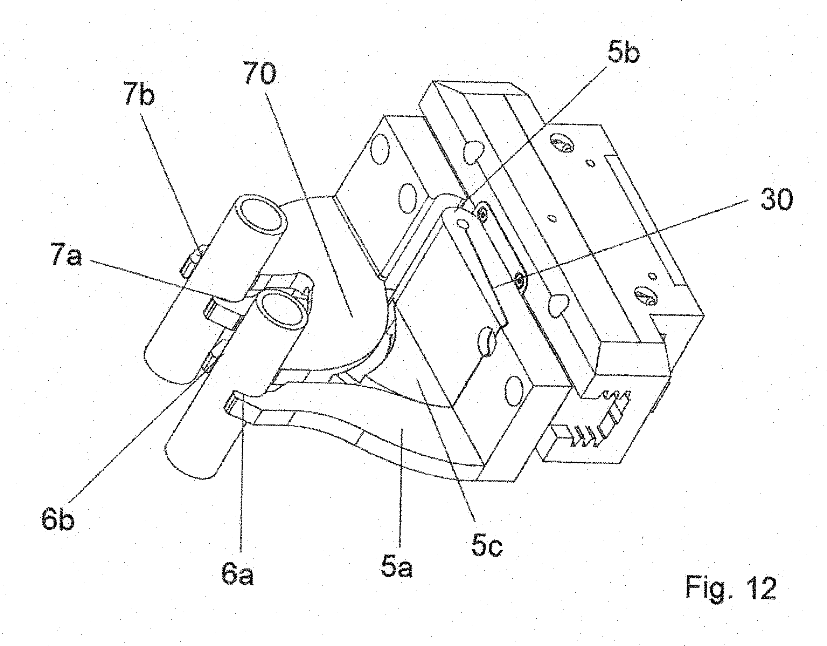

Die Fign. 11 und 12 zeigen entsprechend den Fign. 5 und 6 eine vierte Ausführungsform des erfindungsgemäßen Zwillingsgreifers 1, der sich gegenüber der dritten Ausführungsform dadurch unterscheidet, dass die Ausdehnung der Auflagen 6a, 6b, 7a, 7b in Längsrichtung L gegenüber der dritten Ausführungsform deutlich verkürzt ist. Die Ausdehnung jeder der Auflagen 6a, 6b, 7a, 7b in Längsrichtung L der vierten Ausführungsform und der zweiten Ausführungsform beträgt entlang der gesamten Ausdehnung der Auflagen 6a, 6b, 7a, 7b senkrecht zur Längsrichtung L 10 mm, während die Ausdehnung der Auflagen 6a, 6b, 7a, 7b in Längsrichtung L der ersten und dritten Ausführungsform 60 mm beträgt. Es sind natürlich auch andere Ausdehnungen denkbar. Die Ausdehnung des Federabschnitts 5b in Längsrichtung L der dritten und vierten Ausführungsform ist jedoch gleich, so dass die Federkonstante der dritten und vierten Ausführungsform ebenfalls zumindest im Wesentlichen identisch ist.

Der in den Fign. 11 und 12 dargestellte Zwillingsgreifer 1 weist jedoch keine Öffnung 71 in dem zweiten Backenabschnitt 5c auf, sondern vielmehr sind der zweite Backenabschnitt 5c und der Arm 70 in einem Überlappungsbereich komplementär gegeneinander verjüngt. Die Ausdehnung des Armes 70 wie auch die Ausdehnung des zweiten Backenabschnitts 5c in Längsrichtung L beträgt im Überlappungsbereich etwas weniger als die Hälfte der sonstigen Ausdehnung des Armes 70 und des zweiten Backenabschnittes 5c in Längsrichtung L. In diesem Ausführungsbeispiel beträgt die sonstige Ausdehnung in Längsrichtung 10 mm. Dadurch überschreitet die Längsausdehnung auch im Überlappungsbereich von Arm 70 und zweitem Backenabschnitt 5c nicht die sonstige Längsausdehnung von 10 mm.

### Bezugszeichenliste

- 1: Zwillingsgreifer
- 2: Rohrabschnitt
- 3: Rohrabschnitt
- 4: eine Backe
- 5: weitere Backe
- 5a: erster Backenabschnitt
- 5b: Federabschnitt
- 5c: zweiter Backenabschnitt
- 6: erste Aufnahme
- 6a: erste Auflage
- 6b: erste weitere Auflage
- 7: zweite Aufnahme
- 7a: zweite Auflage
- 7b: zweite weitere Auflage

- 20: Zapfen
- 21: Führung
- 22: gezacktes Profil

- 30: schmaler Spalt

- 70: Arm
- 71: Öffnung

- L: Längsrichtung
- V: Verfahrrichtung

## Patentansprüche

1. Zwillingsgreifer zum gleichzeitigen Greifen zweier Rundprofilabschnitte (2, 3), mit einer ersten Aufnahme (6) mit einer ersten Auflage (6a) und einer ersten weiteren Auflage (6b) und
mit einer zweiten Aufnahme (7) mit einer zweiten Auflage (7a) und einer zweiten weiteren Auflage (7b), wobei die erste und zweite Auflage (6a, 7a) positionsfest miteinander verbunden sind und die erste und zweite weitere Auflage (6b, 7b) federelastisch miteinander verbunden sind und die beiden Auflagen (6a, 7a) gegen die beiden weiteren Auflagen (6b, 7b) in einer Verfahrrichtung (V) hin und her verfahrbar sind,
**dadurch gekennzeichnet, dass** die beiden weiteren Auflagen (6b, 7b) aus einer einteiligen Backe (5) geformt sind und ein die federelastische Kraft ausbildender schmaler Federabschnitt (5b) zwischen zwei die weiteren Auflagen (6b, 7b) aufweisenden Backenabschnitten (5a, 5c) ausgebildet ist.

2. Zwillingsgreifer nach Anspruch 1,
**dadurch gekennzeichnet, dass** die zweite weitere Auflage (7b) federelastisch in Verfahrrichtung (V) beweglich ist.

3. Zwillingsgreifer nach Anspruch 1,
**dadurch gekennzeichnet, dass** zwischen den die beiden weiteren Auflagen (6b, 7b) aufweisenden Backenabschnitten (5a, 5c) ein Spalt (30) ausgeformt ist, der an einer Seite offen und an einer anderen Seite durch den Federabschnitt (5b) begrenzt ist.

4. Zwillingsgreifer nach Anspruch 3,
**dadurch gekennzeichnet, dass** der Spalt (30) über den größten Bereich seiner Ausdehnung eine konstante Spaltbreite aufweist.

5. Zwillingsgreifer nach einem der vorstehenden Ansprüche,
**dadurch gekennzeichnet, dass** ein Abstand der zweiten Auflagen (7a, 7b) voneinander im nicht gespannten Zustand größer ist als ein Abstand der ersten Auflagen (6a, 6b) voneinander.

6. Zwillingsgreifer nach einem der vorstehenden Ansprüche,
**dadurch gekennzeichnet, dass** die federlelastische Bewegung der zweiten weiteren Auflage (7b) parallel zur Verfahrrichtung (V) erfolgt.

7. Zwillingsgreifer nach einem der vorstehenden Ansprüche,
**gekennzeichnet durch** einen Greifarm (70), an dessen einem Ende ein Greifkopf mit den beiden Aufnahmen (6, 7) angeordnet ist.

8. Zwillingsgreifer nach Anspruch 7,
**dadurch gekennzeichnet, dass** der Greifkopf zwei gegeneinander verfahrbare Backen (4, 5) aufweist und die eine Backe (4) die beiden Auflagen (6a, 7a) und die weitere Backe (5) die beiden weiteren Auflagen (6b, 7b) aufweist.

9. Zwillingsgreifer nach Anspruch 8,
**dadurch gekennzeichnet, dass** die Ausdehnung der Auflagen (6a, 6b, 7a, 7b) in Längsrichtung (L) vom Zwillingsgreifertyp abhängig und variabel gestaltet ist, aber die Ausdehnung des Federabschnitts (5b) in Längsrichtung (L) unabhängig von der Ausdehnung der Auflagen (6a, 6b, 7a, 7b) gleich ausgebildet ist.

## Claims

1. A twin gripper for gripping two round-profile portions (2, 3) simultaneously, having a first mount (6) with a first bearing means (6a) and a further first bearing means (6b) and having a second mount (7) with a second bearing means (7a) and a further second bearing means (7b),
wherein the first and second bearing means (6a, 7a) are connected to one another in a fixed position, and the first and second further bearing means (6b, 7b) are connected to one another in a resilient manner, and the two bearing means (6a, 7a) can be displaced back and forth in a displacement direction (V) against the two further bearing means (6b, 7b), **characterized in that** the two further bearing means (6b, 7b) are formed from a one-piece jaw (5) and a narrow spring portion (5b) forming the resilient force is formed between two jaw portions (5a, 5c) including the further bearing means (6b, 7b).

2. The twin gripper according to Claim 1,
**characterised in that** the second further bearing means (7b) can be moved in the displacement direction (V) in a resilient manner.

3. The twin gripper according to Claim 1,
**characterised in that** a gap (30) is formed between the two jaw portions (5a, 5c) including the further bearing means (6b, 7b), the gap being open on one side and being limited by the spring portion (5b) on another side.

4. The twin gripper according to Claim 3,
**characterised in that** the gap (30) has a constant gap width across the largest area of its extension.

5. The twin gripper according to any of the preceding claims,
**characterised in that** a distance of the second bearing means (7a, 7b) from one another in an untensioned state is larger than a distance of the first bearing means (6a, 6b) from one another.

6. The twin gripper according to any of the preceding claims,
**characterised in that** the resilient movement of the second further bearing means (7b) takes place parallelly to the displacement direction (V).

7. The twin gripper according to any of the preceding claims,
**characterised by** a gripping arm (70), at one end of which a gripping head with the two mounts (6, 7) is arranged.

8. The twin gripper according to Claim 7,
**characterised in that** the gripping head includes two jaws (4, 5) which can be displaced against each other and the one jaw (4) includes the two bearing means (6a, 7a) and the further jaw (5) includes the two further bearing means (6b, 7b).

9. The twin gripper according to Claim 8,
**characterised in that** the extension of the bearing means (6a, 6b, 7a, 7b) in a longitudinal direction (L) depends on the type of twin gripper and is designed in a variable manner, but the extension of the spring portion (5b) in the longitudinal direction (L) is designed equally, regardless of the extension of the bearing means (6a, 6b, 7a, 7b).

## Revendications

1. Pince jumelée pour saisir simultanément deux sections de profils ronds (2, 3) avec une première prise (6) avec un premier appui (6a) et un premier autre appui (6b) et avec une seconde prise (7) avec un second appui (7a) et un second autre appui (7b), cependant que le premier et le second appui (6a, 7) sont reliés fixes en position l'un à l'autre et que le premier autre appui et le second autre appui (6b, 7b) sont reliés de manière élastique l'un à l'autre et que les deux appuis (6a, 7a) peuvent se déplacer en va-et-vient dans un sens de déplacement (V) contre les deux autres appuis (6b, 7b),
**caractérisée en ce que** les deux autres appuis (6b, 7b) sont formés à partir d'une mâchoire en une partie (5) et qu'une section de ressort étroite (5b) qui constitue la force élastique est configurée entre deux sections de mâchoire (5a, 5c) qui présentent les autres appuis (6b, 7b).

2. Pince jumelée selon la revendication 1, **caractérisée en ce que** le second autre appui (7b) est mobile élastiquement dans le sens de déplacement (V).

3. Pince jumelée selon la revendication 1, **caractérisée en ce qu'**une fente (30) est formée entre les sections de mâchoire (5a, 5c) qui présentent les deux autres appuis (6b, 7b), fente qui est ouverte sur un côté et qui est limitée, sur un autre côté, par la section de ressort (5b).

4. Pince jumelée selon la revendication 3, **caractérisée en ce que** la fente (30) présente une largeur de fente constante sur la plus grande zone de son extension.

5. Pince jumelée selon l'une des revendications précédentes, **caractérisée en ce qu'**une distance entre les seconds appuis (7a, 7b) l'un par rapport à l'autre, à l'état non serré, est plus grande qu'une distance des premiers appuis (6a, 6b) l'un par rapport à l'autre.

6. Pince jumelée selon l'une des revendications précédentes, **caractérisée en ce que** le mouvement élastique du second autre appui (7b) se fait parallèlement au sens de déplacement (V).

7. Pince jumelée selon l'une des revendications précédentes, **caractérisée par** un bras de préhension (70) à l'une extrémité duquel une tête de préhension est placée avec les deux prises (6, 7).

8. Pince jumelée selon la revendication 7, **caractérisée en ce que** la tête de préhension présente deux mâchoires (4, 5) qui peuvent se déplacer l'une contre l'autre et que l'une des mâchoires (4) présente les deux appuis (6a, 7a) et l'autre mâchoire (5) les deux autres appuis (6b, 7b).

9. Pince jumelée selon la revendication 8, **caractérisée en ce que** l'extension des appuis (6a, 6b, 7a, 7b) dans un sens longitudinal (L) est dépendante du type de pince jumelée et est configurée variable mais que l'extension de la section de ressort (5b) dans le sens longitudinal (L) est configurée pareille indépendamment de l'extension des appuis (6a, 6b, 7a, 7b).
